# EUROPÄISCHE PATENTANMELDUNG

(11) **EP 2 677 492 A1**
(43) Veröffentlichungstag der Anmeldung: **25.12.2013**
(21) Anmeldenummer: 12173212.7
(22) Anmeldetag: 22.06.2012
(51) Int. Cl.: G06T 5/00, G06T 7/00

(54) **Codeleser und Verfahren zur Online-Verifikation eines Codes**

(71) Anmelder: SICK AG, 79183 Waldkirch (DE)
(72) Erfinder: Burghardt, Sascha, 79183 Waldkirch (DE); Rinklin, Dietram, 79110 Freiburg (DE); Schüler, Pascal, 79331 Teningen (DE)
(74) Vertreter: Hehl, Ulrich

(57) **Zusammenfassung**

Es wird ein Codeleser (10) mit einem Bildsensor (20) zur Erzeugung von in Pixel aufgelösten Bildern eines Erfassungsbereichs (12), mit einer Decodiereinheit (24), um Codebereiche (14) in den Bildern zu identifizieren und deren codierte Information auszulesen, sowie mit einer Verifikationseinheit (28) zur Beurteilung der Codequalität nach vorgegebenen Kriterien angegeben. Dabei ist die Verifikationseinheit (28) dafür ausgebildet, für die Verifikation zunächst aus den Codebereichen (14) mittels Bildbearbeitung ein normiertes Verifikationsbild des Codes zu erzeugen.

## Beschreibung

Die Erfindung betrifft einen Codeleser mit einem Bildsensor zur Erzeugung von in Pixel aufgelösten Bildern eines Erfassungsbereichs sowie ein Verfahren zur Online-Verifikation eines Codes nach dem Oberbegriff von Anspruch 1 beziehungsweise 12.

Mit der Weiterentwicklung der digitalen Kameratechnologie lösen kamerabasierte Systeme zunehmend die noch weit verbreiteten Barcodescanner ab, welche einen Barcode mit einem Lesestrahl quer zum Code abtasten. Codeleser werden zum Beispiel an Supermarktkassen, zur automatischen Paketidentifikation, zur Sortierung von Postsendungen oder bei der Gepäckabfertigung in Flughäfen und in anderen Logistikanwendungen eingesetzt.

Ein kamerabasierter Codeleser nimmt, statt Codebereiche abzuscannen, mit Hilfe eines pixelaufgelösten Bildsensors Bilder der Objekte mit den darauf befindlichen Codes auf. Anschließend extrahiert eine Bildauswertungssoftware aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

Um hohe Leseraten sicherzustellen, ist auch die Qualitätskontrolle von Codes wichtig. Nur durch ausreichend hohe Codequalität kann innerhalb der Prozesskette und an den verschiedenen Codelesestellen mit möglicherweise unterschiedlichen Codelesesystemen eine erfolgreiche Decodierung erreicht werden. Die Beurteilung der Codequalität wird auch als Codeverifikation bezeichnet. Es geht hier also primär nicht wie üblich darum, den Inhalt eines Codes auszulesen und weiterzuverarbeiten, sondern darum, gewisse Codeeigenschaften zu überprüfen, welche für die Codelesung erforderlich sind. Dieser Vorgang kann eine Decodierung beinhalten, deren Ergebnis aber schon vorab bekannt sein kann und dann lediglich bestätigt werden soll. Für die Codequalität sind Standards etwa in der ISO 16022 oder der ISO 15415 vereinbart.

Herkömmlich erfolgt eine Codeverifikation in einem Offline-Modus, in dem bestimmte physikalische Rahmenbedingungen vorgegeben sind. Die Codeverifikation soll reproduzierbar und zuverlässig den Prüfling bewerten und nicht Artefakte des Kamera-Setups, wie Erfassungswinkel, gewählte Bildverstärkung oder Belichtungszeit. Dazu werden recht genaue Vorgaben an die Lesesituation während der Verifikation gemacht. Beispielsweise wird eine Codeverifikation in der Bildmitte empfohlen, um einem Randabfall des Objektivs auszuweichen, und dazu wird eine Zielmarkierung vorgegeben, wo der Prüfling platziert werden sollte.

Zu den festzuhaltenden Rahmenbedingungen zählen weiterhin eine bekannte Normbeleuchtung ohne Störlicht aus einer oder mehreren bekannten Richtungen, oft mehrere und periodisch wiederkehrende Kalibrierzyklen, ein fester und nicht veränderbarer Leseabstand zwischen Prüfling und Objektiv und insgesamt die Vorgabe einer definierten Erfassungsposition sowohl was die Lage des Codelesers als auch des zu prüfenden Codes angeht. Solche Randbedingungen sind unter realen Bedingungen im Online-Einsatz praktisch nicht zu erfüllen. Außerdem möchte man die Montage der Codeleser von den Anforderungen der Anwendung abhängig machen und nicht von künstlichen Vorgaben der Codeverifikation.

Wegen dieser widersprüchlichen Anforderungen und dem hohen Aufwand zur Sicherstellung von standardisierten Lesebedingungen sind Verifikationsgeräte zur Qualitätskontrolle von gedruckten oder eingeprägten Codes nur für den Laborbetrieb geeignet. Das hat aber zur Folge, dass die Prüflinge zur Verifikation aus der Produktion entnommen und offline untersucht werden müssen. Auch mobile Verifikationsgeräte entschärfen dieses Problem nicht ausreichend, da sie zwar die Wege verkürzen, aber dennoch weiterhin die Entnahme von Stichproben erfordern. Damit werden nicht nur die Abläufe gestört, sondern auch die Reaktionszeiten auf eine Verschlechterung der Codequalität verlängert. Bis das Ergebnis einer manuellen Codeverifikation nach Entnahme von Prüflingen feststeht, können Produkte in Umlauf geraten, für die eine notwendige Codequalität nicht garantiert werden kann. In nachgelagerten Prozess- und Verteilerketten entstehen dadurch möglicherweise an diversen Lesestationen Probleme. Der technische Aufwand, der für die Einhaltung der physikalischen Rahmenbedingungen getrieben werden muss, führt überdies zu relativ hohen Kosten von Verifikationsgeräten.

Herkömmliche Verifikationsgeräte eignen sich also nicht für den Online-Einsatz, d.h. das eigentliche Codelesen am Ort der Anwendung. Sie sind dafür zu unflexibel, zu teuer und oft auch zu langsam. Umgekehrt sind aber herkömmliche Codeleser im Online-Einsatz auch nicht für die Verifikation geeignet. Denn die standardisierten Bedingungen für eine Codeverifikation sind in aller Regel nicht erfüllt, so dass Artefakte des Kamera-Setups das Ergebnis verzerren würden. Außerdem müssen Dekodierzeiten eingehalten werden, damit die Codeleser im von der Anwendung vorgegebenen Takt Codes erfassen und decodieren. Die Rechenkapazität und Architektur von Codelesern ist nicht darauf ausgelegt, daneben noch eine zeitaufwändige Verifikation durchzuführen. Die Standards fordern teilweise sogar Mehrfachlesungen für eine Codeverifikation und damit noch höheren Aufwand.

Insgesamt ist es herkömmlich nicht möglich, im normalen Online-Decodierbetrieb eine Codeverifikation durchzuführen.

Die US 6 758 399 B1 beschreibt eine Verzerrungskorrektur bei der optischen Codelesung. Es werden Spalten und Zeilen des aufgenommenen Codes gesucht, und das Bild wird so transformiert, dass die Spalten und Zeilen senkrecht beziehungsweise waagerecht liegen. Weitere Korrekturen erfolgen nicht, und eine Codeverifikation ist nicht vorgesehen.

In der EP 1 379 075 A1 wird das Bild korrigiert, um den mehrfach angesprochenen Randabfall zu kompensieren. Dabei werden Pixel entsprechend ihrem Abstand zu zentralen Referenzpixeln aufgehellt.

Es ist daher Aufgabe der Erfindung, die Codeverifikation zu vereinfachen.

Diese Aufgabe wird durch einen Codeleser mit einem Bildsensor zur Erzeugung von in Pixel aufgelösten Bildern eines Erfassungsbereichs sowie ein Verfahren zur Online-Verifikation eines Codes gemäß Anspruch 1 beziehungsweise 12 gelöst. Dabei geht die Erfindung von dem Grundgedanken aus, das übliche Vorgehen bei der Codeverifikation umzukehren. Anstatt für feste, standardgemäße physikalische Randbedingungen zu sorgen, werden die Gegebenheiten vor Ort hingenommen, wie sie sind und sich beispielsweise aus Anforderungen der Anwendung ergeben. Die standardisierten Bedingungen werden dann im Nachhinein durch Bildbearbeitung hergestellt. Dabei entsteht ein normiertes Verifikationsbild, anhand dessen die Codequalität beurteilt wird. Diese Beurteilung hat meist zum Ziel, den Code hinsichtlich verschiedener von Standards vorgegebener Qualitätskriterien zu klassifizieren beziehungsweise sicherzustellen, dass ein Code mindestens eine vorgegebene Codequalität aufweist.

Die Erfindung hat den Vorteil, dass eine mit herkömmlichen Offline-Verifikationsgeräten vergleichbare Qualitätskontrolle von Codes nach gängigen Normen auch im üblichen Online-Betrieb zum Lesen von Codes bei Montage am Ort der Anwendung erreicht wird. Dabei werden vorzugsweise die Resultate auf sogenannten ISO-zertifizierten Compliance-Testkarten erzielt. Der Codeleser dient also zugleich zum Lesen und zum Verifizieren von Codes und ist dabei kostengünstiger und flexibler als ein herkömmliches Verifikationsgerät. Durch die Integration der Codeverifikation in den Lesebetrieb entfällt die Notwendigkeit, Prüflinge aus dem Prozess herauszunehmen. Maßnahmen zur Einhaltung von physikalischen Bedingungen für die Codeverifikation sind nicht mehr erforderlich, etwa eine Normbeleuchtung statt einer üblichen integrierten Lesebeleuchtung, Wechselobjektive, fixe Leseabstände oder Neigungswinkel von Beleuchtung oder Bildsensor gegenüber der Objektebene der zu lesenden Codes. Die Montageposition und -ausrichtung wird von der Anwendung vorgegeben, nicht von der Codeverifikation. Es können automatisch Verifikationsreports erstellt werden, und es gibt zeitnahe automatische Reaktionszeiten, wenn die Codequalität abfällt.

Vorzugsweise wird die Erzeugung des Verifikationsbildes auf Bildbereiche mit Codes beschränkt (ROI, region of interest). Prinzipiell ist es auch möglich, das gesamte Bild in ein Verifikationsbild zu wandeln, aber dies erfordert höhere Rechenkapazitäten.

Die Bildbearbeitung bei der Erzeugung des normierten Verifikationsbildes umfasst bevorzugt mindestens eine der folgenden Maßnahmen: perspektivische Entzerrung, Helligkeitskorrektur, Helligkeitsnormierung, Größennormierung insbesondere von Codemodulen, Rauschunterdrückung und/oder Beleuchtungswinkelbestimmung. Dies sind mögliche Einflüsse, die korrigiert werden sollten, um ein Verifikationsbild entsprechend den herkömmlichen standardisierten Rahmenbedingungen zu erhalten.

Die Verifikationseinheit ist bevorzugt dafür ausgebildet, Bildbereiche mit Hilfe einer perspektivischen Transformation zu entzerren, welche Geometrien auf einer Objektebene in dem Erfassungsbereich in Geometrien der Bildebene umrechnet. Unabhängig davon, aus welcher Perspektive die Bilder von dem Codeleser tatsächlich aufgenommen werden, entsteht so ein Bild aus einer der perspektivischen Transformation entsprechenden, vorgebbaren Normperspektive, etwa direkte orthogonale Draufsicht.

Die Verifikationseinheit ist bevorzugt dafür ausgebildet, Helligkeitswerte von einzelnen Pixel oder Gruppen von Pixel mit einem Korrekturfaktor zu modifizieren, der aus einer perspektivischen Transformation berechnet ist, welche Geometrien auf einer Objektebene in dem Erfassungsbereich in Geometrien der Bildebene umrechnet, um ein gleichmäßiger ausgeleuchtetes Bild zu erhalten. Hier wird die perspektivische Transformation anders als im vorigen Abschnitt zu einer geometrischen Entzerrung für eine Helligkeitskorrektur ausgenutzt. Denn durch Abweichungen von einer orthogonalen Draufsicht auf die Objektebene mit dem Code entstehen Grauwertverläufe, welche für das Verifikationsbild unerwünscht sind. Dementsprechend werden Korrekturfaktoren aus der perspektivischen Transformation berechnet, welche die Neigung der optischen Achse des Bildsensors kompensiert. Das derart korrigierte Bild wird damit helligkeitskorrigiert beziehungsweise erscheint homogen ausgeleuchtet und entspricht somit einem Bild, das in einer imaginären Referenzsituation bei normierter, homogener Ausleuchtung aus der senkrechten Draufsicht aufgenommen ist. Damit wird eine Codeverifikation auch unter starker Neigung des Codelesers ermöglicht. Die Bedingung für eine Codeverifikation, dass der Code aus einer senkrechten Draufsicht aufgenommen wird, muss nicht mehr physikalisch mit den entsprechenden Nachteilen etwa durch Reflexe sichergestellt werden, sondern wird im Nachhinein rechnerisch erfüllt. Die Korrekturfaktoren können während der jeweiligen Helligkeitskorrektur berechnet werden. Bevorzugt werden die Korrekturfaktoren aber, da sie ja von dem Codeleser und dessen Montage, nicht aber der konkreten Szenerie und den dementsprechend aufgenommenen Bildern abhängen, nur einmalig vorab berechnet und abgespeichert.

Die Verifikationseinheit ist bevorzugt dafür ausgebildet, einen Korrekturfaktor aus dem Verhältnis des Flächeninhalts einer Teilfläche der Bildebene, insbesondere einer durch regelmäßige Aufteilung der Bildebene erhaltenen Teilfläche, zu dem Flächeninhalt der gemäß der perspektivischen Transformation entstehenden Teilfläche zu berechnen. Dabei wird also das Verhältnis von ursprünglichen Flächenelementen der Bildebene zu entsprechenden Flächenelementen nach Anwendung der perspektivischen Transformation betrachtet. Der Korrekturfaktor kann unmittelbar als dieses Flächenverhältnis beziehungsweise dessen Kehrwert gewählt werden. Alternativ wird der Korrekturfaktor noch weiter modifiziert, beispielsweise indem besonders kleine Flächenverhältnisse überproportional gewichtet werden, um besonders stark durch die Perspektive verdunkelte Bildbereiche in besonderem Maße aufzuhellen. Die Teilflächen der Bildebene sind noch bevorzugter durch regelmäßige Aufteilung der Bildebene festgelegt, beispielsweise in Bildquadrate. Die Bildebene wird dabei mit einem Raster oder Gitter überzogen. Dadurch entstehen regelmäßige Teilflächen in der Bildebene, insbesondere gleich große Quadrate. Die Anwendung der perspektivischen Transformation überführt diese Quadrate in Trapeze. Jeder Pixel innerhalb eines Bildquadrats wird nun über den Korrekturfaktor in seiner Helligkeit in einem Maße aufgehellt oder verdunkelt, der dem Flächenverhältnis des Quadrates zu dem zugehörigen Trapez entspricht. Damit wird der Energieverlust aufgrund der Schrägstellung der Objektebene, verursacht durch die Perspektive des Bildsensors beziehungsweise dessen Neigung, im Nachhinein durch Bildbearbeitung kompensiert.

Die Verifikationseinheit weist bevorzugt ein FPGA auf, welches die Pixel eines erfassten Bildes mit zuvor abgelegten Korrekturfaktoren multipliziert. Die Bestimmung der Korrekturfaktoren auf Basis der perspektivischen Transformation erfolgt hierbei einmalig vor dem eigentlichen Betrieb. Die Korrekturfaktoren werden danach gespeichert, beispielsweise in einer Nachschlagtabelle (lookup table). Der Aufwand für die eigentliche Helligkeitskorrektur reduziert sich dann auf eine punktweise Multiplikation der Pixel mit den zugehörigen Korrekturfaktoren. Solche einfachen, aber in sehr großer Zahl möglichst in Echtzeit zu wiederholenden Rechenaufgaben erfüllt ein FPGA besonders kostengünstig. Alternativ kann die Helligkeitskorrektur per Software auf einem hinreichend leistungsfähigen Mikrocontroller ausgeführt werden.

Vorzugsweise ist eine Kalibriereinheit vorgesehen, welche dafür ausgebildet ist, die perspektivische Transformation als diejenige zu bestimmen, mit der eine bekannte absolute Geometrie eines Kalibriercodes in dessen erfasste Geometrie in dem Bild überführt wird. Aufgrund von perspektivischen Verzerrungen wird der Kalibriercode im Allgemeinen nicht so aufgenommen, dass in dem aufgenommenen Bild seine tatsächliche Geometrie erkennbar ist. Beispielsweise wird ein rechteckiger Kalibriercode zu einem Trapez verzerrt. Die absolute Geometrie, nämlich die rechteckige Gestalt gegebenenfalls einschließlich der Seitenverhältnisse oder sogar der absoluten Abmessungen, ist vorab bekannt, sei es durch allgemeine Annahmen oder Parametrierung. Alternativ kann diese Geometrie in dem Kalibriercode selbst codiert sein, so dass sie dem Codeleser durch eine Codelesung bekannt wird. Somit ist möglich, die gesuchte perspektivische Transformation als diejenige Transformation zu bestimmen, welche die erfasste Geometrie des Kalibriercodes, also beispielsweise ein Trapez, in seine tatsächliche oder absolute Geometrie überführt, nämlich in dem Beispiel ein Rechteck.

Der Kalibriercode braucht dafür keinerlei spezielle Eigenschaften für die Helligkeitskorrektur aufzuweisen, also beispielsweise nicht uniform rein weiß zu sein. Deshalb genügt ein einfacher, im Feld herstellbarer Kalibriercode, der auch zugleich für eine andere Kalibrierung verwendet wird, beispielsweise eine Längeneichung oder eine Verzeichnungskorrektur. Eine zyklische Mehrfachkalibrierung wie bei herkömmlichen Verifikationsgeräten ist nicht erforderlich. Da sich im Prinzip jede Struktur mit bekannter Geometrie für diese Kalibrierung eignet, erkennt die Vorrichtung bevorzugt selbst, wenn die Kalibrierung nicht mehr stimmt. Das ist nämlich dann der Fall, wenn eine erfasste Geometrie, etwa eines Codebereichs, nach Anwendung der perspektivischen Transformation nicht mehr der erwarteten absoluten Geometrie entspricht. Die Ursache dafür könnte beispielsweise darin liegen, dass sich die Neigung oder Position des Codelesers verschoben hat, und dieser ist deshalb in der Lage, eine erneute Kalibrierung anzufordern oder direkt selbst auszuführen.

Vorzugsweise ist eine Abstandsmesseinheit vorgesehen, insbesondere nach dem Prinzip der Lichtlaufzeitbestimmung, um den Abstand zu einem gelesenen Code oder einem erfassten Objekt zu bestimmen. Derartige Abstandsmessungen werden häufig für eine Autofokuseinstellung eingesetzt. Damit wird zusätzlich zu den beiden Dimensionen der Bilder auch die dritte Dimension des Leseabstands zugänglich, so dass die perspektivische Transformation und die erforderlichen geometrischen Entzerrungen oder Helligkeitskorrekturen noch wesentlich genauer bestimmt und angewandt werden können.

Die Verifikationseinheit ist bevorzugt dafür ausgebildet, einen Beleuchtungswinkel zwischen der Bildebene und der Objektebene aus der perspektivischen Transformation abzuleiten. Dieser Winkel ist ein Raumwinkel, der beispielsweise in drei Winkelkomponenten der Neigung gegenüber einem Bezugskoordinatensystem angegeben werden kann, und sollte für bestimmte Tests bei der Codeverifikation bekannt sein.

Die Verifikationseinheit ist bevorzugt dafür ausgebildet, eine Helligkeitskorrektur mit Randabfallkorrekturfaktoren durchzuführen, die einen bekannten oder angenommenen Helligkeitsabfall des Bildsensors in dessen Randbereichen kompensieren. Dieser Randabfall folgt typischerweise einem cos⁴-Gesetz. In einem Verifikationsbild mit Randabfallkorrektur ist die Verifikation ortsunabhängig, d.h. man muss nicht mehr darauf achten, ob sich der Code in der Bildmitte befindet. Dementsprechend ist umgekehrt eine Randabfallkorrektur verzichtbar, wenn anderweitig sichergestellt ist, dass in den Randbereichen des Bildes keine Codes gelesen oder verifiziert werden. Der Randabfall kann zusätzlich zu den perspektivischen Helligkeitsverzerrungen korrigiert werden. Auf ähnliche Weise können auch andere bekannte Zusatzeffekte auf die Helligkeitsverteilung in weiteren Schritten korrigiert werden. Vorzugsweise werden lediglich einmalig die Korrekturfaktoren angepasst, um auch den Randabfall oder einen anderen Effekt zu berücksichtigen, so dass dann im Betrieb kein zusätzlicher Aufwand erforderlich ist, um die Helligkeitskorrektur noch weiter zu verbessern.

Die Verifikationseinheit ist bevorzugt dafür ausgebildet, einen Mittelwert der Helligkeitswerte von hellen Codeelementen zu bestimmen, einen Normierungsfaktor aus dem Verhältnis des Mittelwertes zu einem gewünschten Mittelwert zu berechnen und die Helligkeit des Codebereiches zu normieren, indem dessen Helligkeit mit dem Normierungsfaktor angepasst wird. Auf diese Weise wird das Verifikationsbild helligkeitsnormiert. Die Unterscheidung von hellen Codeelementen gegenüber dunklen Codeelementen muss der Codeleser ohnehin treffen können, um Codes zu lesen, beispielsweise während einer Binarisierung zur Festlegung der globalen oder lokalen Binarisierungsschwelle. Der Mittelwert der Helligkeit von Pixel der hellen Codebereiche ist ein Maß für die Helligkeit des Codes, diese Helligkeit soll für das Verifikationsbild festgelegt sein, beispielsweise in einem Bereich von 70%-86% der maximalen Helligkeit, in dem helle Codebereiche sicher als solche erkannt werden, ohne andererseits zu übersteuern. Bei einer 8-Bit-Codierung der Helligkeit kann man beispielsweise den gewünschten Mittelwert auf 200 festlegen, denn dann liegt das Verhältnis zum maximalen Helligkeitswert von 255 mit ca. 78% gerade mittig in dem gewünschten Intervall.

Die Verifikationseinheit ist bevorzugt dafür ausgebildet, die Codebereiche durch Interpolation der erfassten Bilddaten so zu reskalieren, dass alle Codemodule eine Mindestgröße aufweisen. Sofern also ein Codemodul zunächst zu klein aufgenommen wurde, etwa wegen großem Leseabstand oder besonders starker Neigung, werden durch Interpolation Kanten im Subpixelbereich erkannt, und darauf basierend werden die Codemodule vergrößert, um die Mindestgröße zu erreichen. Nach dieser Größennormierung erfüllt das Verifikationsbild eine weitere Standardisierungsanforderung.

Die Verifikationseinheit ist bevorzugt dafür ausgebildet, eine Kennzahl für ein Bildrauschen in dem Codebereich zu ermitteln und das Bild des Codebereichs mit einem Filter zu glätten, der anhand der Kennzahl parametriert ist. Die Kennzahl kann aus Maßen des Bildes selbst, etwa dessen Kontrast insbesondere an Hell-Dunkel-Übergängen von Codelementen, oder des Aufnahmesystems abgeleitet werden, etwa der Belichtungszeit des Bildsensors oder eines Verstärkungsfaktors von dessen Signal. Je nachdem, wie stark das Rauschen gemäß der Kennzahl ist, wird dann ein Glättungsfilter, wie ein Medianfilter, entsprechend parametriert. In dem Verifikationsbild ist dann das Rauschen in einem angemessenen Maß unterdrückt.

Die Verifikationseinheit ist bevorzugt dafür ausgebildet, ein Verifikationsbild parallel zu der Decodierung des Codeinhalts in der Decodiereinheit zu erzeugen und/oder zu beurteilen. Die Verifikation erfolgt also im Produktionsbetrieb. Dazu kann ein Hintergrundprozess vorgesehen sein, welcher Verifikationen nur mit Rechenkapazitäten durchführt, die während des vorrangigen eigentlichen Betriebs mit Lesen der Codes übrig bleiben, oder ein echter Parallelprozess. Je nachdem, wie viele Rechenkapazitäten für die Verifikation bereitstehen, erfolgt diese stichprobenartig oder sogar für jeden gelesenen Code. Es ist denkbar, eine Rate auszugeben, wie viele der gelesenen Codes auch verifiziert werden konnten. Genaugenommen können zwei derartige Raten ausgegeben werden: Einmal eine Rate, wie viele Codes überhaupt einer Verifikation unterzogen wurden, und einmal eine Rate, wie viele Codes erfolgreich verifiziert wurden, wobei letztere auch aus einer Stichprobe hochgerechnet sein kann. Als Alternative ist jeweils ein exklusiver Modus des Codelesers vorgesehen, in dem entweder Codes gelesen oder Codes verifiziert werden. Es ist auch denkbar, die Bildbearbeitung zur Erzeugung des Verifikationsbildes stets für jeden Code als eine Art Vorverarbeitung durchzuführen. Danach versucht einerseits die Decodiereinheit, den Code auf Basis des Verifikationsbildes zu lesen, möglicherweise zusätzlich zu einem Leseversuch auf den ursprünglichen Bilddaten des Codebereichs, und andererseits unterzieht die Verifikationseinheit den Code einer Qualitätsprüfung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines kamerabasierten Codelesers;
- Fig. 2: eine schematische Darstellung der perspektivischen Transformation zwischen Objektebene und Bildebene;
- Fig. 3a-b: je eine schematische Darstellung der Transformation eines Bildquadrats der Bildebene auf ein kleineres und ein größeres Trapez in der Objektebene; und
- Fig. 4: ein beispielhaftes Ablaufdiagramm der Schritte bei der Erzeugung eines Verifikationsbildes.

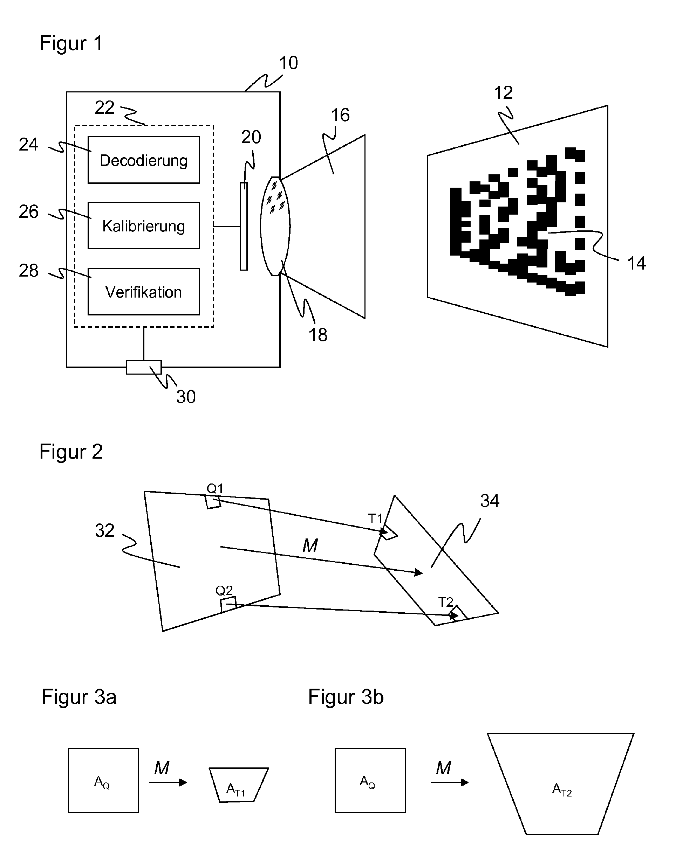

Figur 1 zeigt eine schematische Schnittdarstellung eines kamerabasierten Codelesers 10. Der Codeleser 10 nimmt Bilder aus einem Erfassungsbereich 12 auf, in dem sich beliebige Objekte mit Codes 14 befinden können. Das Licht aus dem Erfassungsbereich 12 wird durch ein Aufnahmeobjektiv 16 empfangen, in dem nur eine dargestellte Linse 18 die Aufnahmeoptik repräsentiert. Ein Bildsensor 20, beispielsweise ein CCD-oder CMOS-Chip mit einer Vielzahl von zu einer Zeile oder einer Matrix angeordneten Pixelelementen, erzeugt Bilddaten des Erfassungsbereichs 12 und gibt diese an eine als Ganzes mit Bezugszeichen 22 gekennzeichnete Auswertungseinheit weiter. Für eine bessere Erfassung des Codes 14 kann der Codeleser 10 mit einer nicht dargestellten aktiven Beleuchtung ausgerüstet sein.

Die Auswertungseinheit 22 ist auf einem oder mehreren digitalen Bausteinen implementiert, beispielsweise Mikroprozessoren, ASICs, FPGAs oder dergleichen, die auch ganz oder teilweise außerhalb des Codelesers 10 vorgesehen sein können. Dargestellt sind nicht die physischen, sondern die funktionalen Module der Auswertungseinheit 22, nämlich eine Decodiereinheit 24, eine Kalibriereinheit 26 und eine Verifikationseinheit 28.

Die Decodiereinheit 24 ist in der Lage, Codes 14 zu decodieren, also die in den Codes 14 enthaltene Information auszulesen. Beispielhaft in Figur 1 dargestellt ist ein DataMatrix-Code. Gleichermaßen können aber auch beliebige andere ein- oder zweidimensionale Codetypen verarbeitet werden, solange in der Decodiereinheit 24 entsprechende Leseverfahren implementiert sind. 1 D-Codes sind üblicherweise Barcodes. Einige nicht abschließende Beispiele für gängige 2D-Codes sind DataMatrix, QR-Code, Aztec-Code, PDF417 oder MaxiCode. Der Decodierung kann eine Vorverarbeitung vorausgehen, bei welcher innerhalb der Bilder des Bildsensors 20 interessierende Bereiche (ROI, region of interest) mit darin vermuteten oder erkannten Codes 14 identifiziert, die Bilder binarisiert werden oder dergleichen.

Die Kalibriereinheit 26 dient einer Kalibrierung des Codelesers 10, wobei hier vor allem die Erkennung und Korrektur einer Perspektive und insbesondere einer Neigung oder Schrägstellung (Skew) des Bildsensors 20 gegenüber einer Objektebene des Codes 14 relevant ist. Die Bestimmung einer entsprechenden perspektivischen Transformation M wird weiter unten mit Bezugnahme auf Figur 2 genauer erläutert.

Die Verifikationseinheit 28 ist in der Lage, aus einem Eingangsbild durch verschiedene Bildbearbeitungsschritte ein Verifikationsbild mit standardisierten Eigenschaften zu erzeugen. Dabei werden durch Softwarealgorithmen Effekte herausgerechnet, die etwa durch den installierten Kamerawinkel des Codelesers 10, den Leseabstand, das Objektiv 18, Shutterzeiten und dergleichen entstehen. Denkbare Bildbearbeitungsschritte hierzu sind perspektivische Entzerrung, Helligkeitskorrektur, Helligkeitsnormierung, Größennormierung, Rauschunterdrückung oder Beleuchtungswinkelbestimmung. Das Ergebnis ist ein Verifikationsbild, welches dem Bildeinzug eines Offline-Verifikationsgerätes mit festgeschriebenen physikalischen Rahmenbedingungen jedenfalls so nahe kommt, dass die Messresultate gemäß den einschlägigen ISO-Normen im Quervergleich keine oder kaum Abweichungen zeigen. Das Verifikationsbild kann auch für eine (weitere) Codelesung in der Decodiereinheit 24 genutzt werden, um die Leserate zu steigern.

An einem Ausgang 30 des Codelesers 10 können Daten ausgegeben werden, beispielsweise Ergebnisse von Codeverifikationen, gelesene Codeinformationen oder auch Bilddaten in verschiedenen Verarbeitungsstufen.

Nachfolgend werden die Bildbearbeitungsschritte einzeln erläutert. Prinzipiell genügt es, die Bildbearbeitung auf Codebereiche 14 zu beschränken, welche in einer Vorverarbeitung identifiziert werden, um den Rechenaufwand zu begrenzen.

Bilder des Codes 14 sind aufgrund der Aufnahmeperspektive regelmäßig verzerrt. Denn oft ist die Ausrichtung nicht orthogonal, mit anderen Worten schließt die optische Achse des Bildsensors 20 gegenüber einer Normalen auf eine Objektebene der zu lesenden Codes 14 einen Winkel ungleich Null ein. Eine solche geneigte Orientierung des Codelesers 10 ist aufgrund der baulichen Gegebenheiten in der Anwendung, dem Ziel, Codes 14 aus allen Richtungen lesen zu können, und beispielsweise auch deshalb erwünscht, um bei glänzenden Oberflächen nicht zu viel Licht in den Bildsensor 20 zurückzureflektieren. Dafür treten aber perspektivische Verzerrungen auf, die in sich Anforderungen an ein Verifikationsbild verletzen und zusätzlich noch eine inhomogene Helligkeitsverteilung beziehungsweise Grauwertrampen verursachen. Diese perspektivischen Effekte können als ein Teil der ausgleichenden Bildverarbeitung bei der Erzeugung des Verifikationsbildes kompensiert werden.

Figur 2 illustriert dazu rein beispielhaft die Bildebene 32 des Bildsensors 20 und die Objektebene 34 des Codes 14 bei einer gegebenen Orientierung von Codeleser 10 zu Code 14. Im allgemeinen Fall sind Bildebene 32 und Objektebene 34 nicht zueinander parallel, und der entsprechende Neigungswinkel des Codelesers 10 gegenüber der Objektebene 34 sorgt für die angesprochene perspektivische Verzerrung.

Durch eine Kalibrierung kann die Matrix *M* der perspektivischen Transformation beziehungsweise deren Inverse bestimmt werden, welche Geometrien der Bildebene 32 in Geometrien der Objektebene 34 überführt. Dazu wird beispielsweise ein beliebiger rechteckiger Code als Kalibriercode präsentiert. Andere Geometrien des Kalibriercodes sind ebenso denkbar, solange die Kalibriereinheit 26 diese Geometrie kennt oder beispielsweise durch Auslesen eines entsprechenden Codeinhalts des Kalibriercodes erfährt.

Durch Lesen des Kalibriercodes in der Decodiereinheit 24 sind die Positionen der vier Eckpunkte des Kalibriercodes 100 mit großer Genauigkeit bekannt. In der Kalibriereinheit 26 wird nun eine Transformation beispielsweise über die Abbildungsmatrix *M* berechnet, welche die Eckpunkte des verzerrt aufgenommenen Kalibriercodes in die tatsächliche Geometrie eines Rechtecks überführt. Die Abbildungsmatrix *M* ist eine perspektivische Transformation, die eine Rotation, eine Translation und eine Reskalierung enthalten kann. Sofern auch die absoluten Abmessungen des Kalibriercodes bekannt sind, ist die Transformation maßstabsgetreu. Diese Abmessungen können ebenfalls vorbestimmt, parametriert oder aus dem Codeinhalt des Kalibriercodes gelesen werden, der beispielsweise einen Klartext mit seinen Abmessungen enthält: "Kalibriercode, rechteckig, 3cm mal 4cm". Ohne diese Zusatzinformation der absoluten Abmessungen verbleibt noch ein unbekannter Skalierungsfaktor der Matrix *M*.

Die einmal während des Kalibriervorgangs bestimmte Transformationsvorschrift *M* behält ihre Gültigkeit nur so lange, wie der Codeleser 10 gegenüber den zu lesenden Codes 14 in seiner Perspektive verbleibt. Indem ein beliebiger Code 14 während des Betriebs als Kalibriercode aufgefasst wird, kann geprüft werden, ob die Kalibrierung noch stimmt. Dazu wird die Transformation *M* auf einen Code 14 angewandt und geprüft, ob dessen Eckpunkte noch erwartungsgemäß ein Rechteck bilden.

Aufgrund der Kalibrierung ist somit eine perspektivische Transformation *M* bekannt, die bestimmt, wie eine beliebige Geometrie auf der Objektebene 34, also einer ebenen Fläche, von welcher der Kalibriercode gelesen wurde, auf die Bildebene 32 abbildet und umgekehrt. Dieses Wissen kann genutzt werden, um Bildbereiche mit Codes 14 perspektivisch zu entzerren. Anstatt die perspektivische Transformation durch eine Kalibrierung zu bestimmen, kann sie alternativ auch eingegeben oder mit Hilfe von festzulegenden Parametern, wie dem Neigungswinkel von Codeleser 10 und der Orientierung der Objektebene 34, aus einem Modell berechnet werden.

Die perspektivische Transformation *M* wird außerdem für eine Helligkeitskorrektur verwendet. Die Grundüberlegung dazu ist, die Bildebene 32 gedanklich als einen homogenen Flächenstrahler aufzufassen, der die Objektebene 34 bestrahlt, und die Verteilung der Photonen auf eine Fläche in der Objektebene zu betrachten. Dieser Flächenstrahler wird in gleich große Quadrate mit dem Flächeninhalt A_{Q} unterteilt, wobei Figur 2 beispielhaft zwei solche Quadrate Q1 und Q2 zeigt. Die perspektivische Transformation M gibt für jede Geometrie der Bildebene und damit auch für die Quadrate Q1 und Q2 die entsprechenden Geometrien in der Objektebene 34 an, nämlich Trapeze T1 und T2.

Je nachdem, wo sich das Quadrat Q1, Q2 in der Bildebene 32 befindet, entsteht ein unterschiedlich großes Trapez T1, T2 als Teilbereich der Objektebene 34. Das ist schematisch in den Figuren 3a-b einmal für den Fall eines kleineren entstehenden Trapezes mit Flächeninhalt A_{T1} und einmal für den Fall eines größeren entstehenden Trapezes mit Flächeninhalt A_{T2} gezeigt.

Die Quadrate Q1, Q2 in der Bildebene 32 sind untereinander gleich groß und entsprechen in der imaginären Betrachtung der Bildebene 32 als Flächenstrahler einer gleichen Menge abgestrahlter Energie oder Photonen in Richtung Objektebene 34. Man kann nun nur leicht vereinfachend davon ausgehen, dass diese abgestrahlte Energie auch vollständig in der Objektebene 34 ankommt. Die Anzahl Photonen, die pro Zeiteinheit auf ein Trapez T1, T2 der Objektebene 34 trifft, hängt deshalb nur noch von dem Flächeninhalt der Trapeze T1, T2 ab. Ist die Fläche des Trapezes T1, T2 größer als die Ausgangsfläche des Quadrates Q1, Q2, so verteilt sich die gleiche Anzahl Photonen auf eine größere Fläche, so dass die Objektebenenfläche dunkler wird als das Bildebenenquadrat. Entsprechend entsteht bei kleinerer Fläche des Trapezes T1, T2 eine größere Photonendichte, eine solche Fläche muss demnach heller erscheinen.

Dieser Zusammenhang zwischen Helligkeit und Flächenverhältnissen auf der Bildebene 32 und der Objektebene 34 wird von der Verifikationseinheit 28 ausgenutzt. Gemäß der Modellüberlegung genügt es, als Korrekturfaktoren für eine Helligkeitskorrektur das Flächenverhältnis des Quadrates Q1, Q2 zu dem gemäß der perspektivischen Transformation *M* entstehenden Trapez T1, T2 heranzuziehen. Diese Korrekturfaktoren können beispielsweise direkt pixelweise an die von dem Bildsensor 20 gelieferten Grauwerte des Eingangsbildes multipliziert werden, um das helligkeitskorrigierte Bild zu erhalten.

Formal ausgedrückt ergibt sich für ein Bildebenenquadrat Q an der Position x,y mit Flächeninhalt A_{Q(x,y)} aus der Transformation ein Trapez T mit Flächeninhalt A_{T(x,y)}, und der zu multiplizierende Korrekturwert für die in dem Bildebenenquadrat Q enthaltenen Pixel beziehungsweise deren Grauwerte berechnet sich zu Hₘᵤₗ=A_{Q(x,y)}/A_{T(x,y)}. Je kleiner dabei der Flächeninhalt des Quadrats Q in der Bildebene 32 gewählt wird, je weniger Pixel also in einer Gruppe mit einem gemeinsamen Korrekturfaktor behandelt werden, desto gleichmäßiger wird die Helligkeitskorrektur.

Ist die Matrix M einmal in der Kalibrierung bestimmt, können daraus auch die Korrekturfaktoren berechnet werden. Die Helligkeitskorrektur selbst ist dann nur noch eine punktweise Multiplikation mit Konstanten. Besonders für die letztgenannte Operation eignet sich die Implementierung der Helligkeitskorrektur auf einem FPGA, welches die Multiplikationen in Echtzeit beispielsweise mit Hilfe einer Nachschlagtabelle berechnet und damit eine Kern-CPU der Auswertungseinheit 22 entlastet.

Außer durch die Perspektive kann die Helligkeit auch durch weitere Effekte verzerrt sein, beispielsweise einen Randabfall durch das Aufnahmeobjektiv 16. Dieser Randabfall folgt in der Regel einer bekannten cos⁴-Beziehung. Aber auch unabhängig von den Gesetzmäßigkeiten können weitere Korrekturfaktoren berechnet werden, um derartige Effekte auf die Helligkeit zu kompensieren. Es werden dann entweder die weiteren Korrekturfaktoren in einem eigenen Schritt mit den Helligkeitswerten der Pixel multipliziert, oder die oben aufgeführten Korrekturfaktoren werden modifiziert beziehungsweise multiplikativ verrechnet, um einen Randabfall oder weitere Effekte zusätzlich zu einer perspektivischen Helligkeitsverzerrung zu berücksichtigen. Nach einer Randabfallkorrektur ist nicht mehr erforderlich, dass der zu verifizierende Code 14 in der Bildmitte liegt.

Die bisher vorgestellte Helligkeitskorrektur sorgt für eine homogene Helligkeitsverteilung, die einer standardisierten Aufnahme beziehungsweise Beleuchtung aus orthogonaler Perspektive entspricht. Dennoch kann die Aufnahme insgesamt noch zu dunkel oder zu hell bleiben. Um dies auszugleichen, ist eine Helligkeitsnormierung vorgesehen. Eine Vorgabe an die Reflexionskalibrierung für die Verifikation kann beispielsweise darin liegen, die Systemantwort etwa über Belichtungszeit (Shutter) und Verstärkung so einzustellen, dass sich ein Mittelwert von hellen Codeelementen in einem Bereich von 70%-86% der maximalen Grauwerte oder der höchsten Reflexion befindet. Entsprechend wird in der Bildbearbeitung ein Normierungsfaktor gesucht, der mit sämtlichen Pixel multipliziert wird, damit ein solcher Mittelwert erreicht wird. Ein Beispiel ist ein Grauwert von 200 bei einer 8-Bit-Grauwertcodierung, oder jeder andere Wert in dem gesuchten Intervall von 70%-86% des maximalen Grauwerts von 255. Praktisch wird dafür ein Histogramm für die Schätzung der Grauwertverteilung gebildet, insbesondere nachdem die perspektivische Entzerrung und die Helligkeitskorrektur vorgenommen wurden. Anhand des Histogramms wird ein Mittelwert der Grauwerte der hellen Codeelemente bestimmt und der Normierungsfaktor dann durch Quotientenbildung mit dem gewünschten Mittelwert aufgefunden. Durch Multiplikation der Grauwerte des Bildes mit dem Normierungsfaktor werden Signal und Kontraste in dem Verifikationsbild auf das gewünschte helligkeitsnormierte Niveau angehoben oder abgesenkt.

Einen weiteren Einfluss auf das Bild nimmt Rauschen, dessen Intensität unter anderem von den Shutter- oder Belichtungszeiten, der Kameraverstärkung und der Fokuslage abhängt. Bei einer Online-Verifikation in der Anwendung können auch solche Parameter nicht gemäß einem Standard konstant gewählt werden, sondern sie werden vielmehr dadurch bestimmt, den aktuell zu erfassenden Code 14 möglichst verlässlich lesen zu können. Es ist aber möglich, aus den signifikanten Aufnahmeparametern sowie durch Prüfung des Eingangsbildes selbst, beispielsweise von dessen Kontrast gerade in Übergängen zwischen hellen und dunklen Codebereichen, eine Kennzahl abzuleiten, welche die Stärke des Rauschens bewertet. Diese Kennzahl dient dazu, einen geeigneten Glättungsfilter auszuwählen, beispielsweise einen Medianfilter, beziehungsweise einen solchen Filter in Abhängigkeit von der Kennzahl geeignet zu parametrieren. Nach Anwendung des Glättungsfilters auf das Verifikationsbild wird somit ein verringertes Bildrauschen erreicht, welches weitgehend unabhängig vom ursprünglichen Rauschlevel ist.

Für die Verifikation ist weiterhin eine Mindestgröße pro Codemodul oder Codebalken erforderlich. Um diese Mindestgrößen gemäß den ISO-Normen zu gewährleisten, ist in der Verifikationseinheit 28 vorzugsweise auch ein Interpolationsverfahren implementiert, etwa eine bi-kubische Interpolation, mit dem das Verifikationsbild mit erhöhter Auflösung neu gerastert wird (resampling). Mit solchen Techniken können beim Codelesen Kanten mit einer Genauigkeit von mindestens 1/10 Pixel lokalisiert werden. Daher werden durch das Resampling nur Informationen genutzt, die im Grauverlauf selbst enthalten sind, und im Ergebnis wird ein Zoom-Effekt erzielt, bei dem die Auflösung des Codebereichs 14 in Pixel mit einem Faktor entsprechend der Interpolationsgenauigkeit erhöht wird. Somit können auch Codes 14 mit sehr kleinen Modulzellen verifiziert werden, sei es weil die Modulzellen tatsächlich sehr klein gedruckt sind oder weil sie aus größerer Entfernung aufgenommen sind. Ein herkömmliches Verifikationsgerät mit fixem Abstand von Code zu Bildebene dagegen kann sehr kleine Codemodule nur nach ISO verifizieren, wenn durch Austausch des Kameramoduls die Auflösung entsprechend erhöht wird.

Einige Normen wie die AIM-DPM für direkt eingeprägte Codes (DPM, direct part marking) benötigen bei der Verifikation zusätzliche Kenntnis über den Beleuchtungswinkel. Dieser Winkel ist ein Raumwinkel, der je nach Bezugssystem in mehreren Koordinaten anzugeben ist. Da der Codeleser 10 in der Regel eine eigene, interne Beleuchtung verwendet, stimmen meist der Winkel der optischen Achse des Codelesers 10 und der Beleuchtungswinkel überein. Somit kann der Beleuchtungswinkel aus der perspektivischen Transformation *M* abgeleitet werden, beispielsweise indem berechnet wird, in welchem Winkel die optische Achse des Codelesers 10 gegenüber ihrer Transformierten steht.

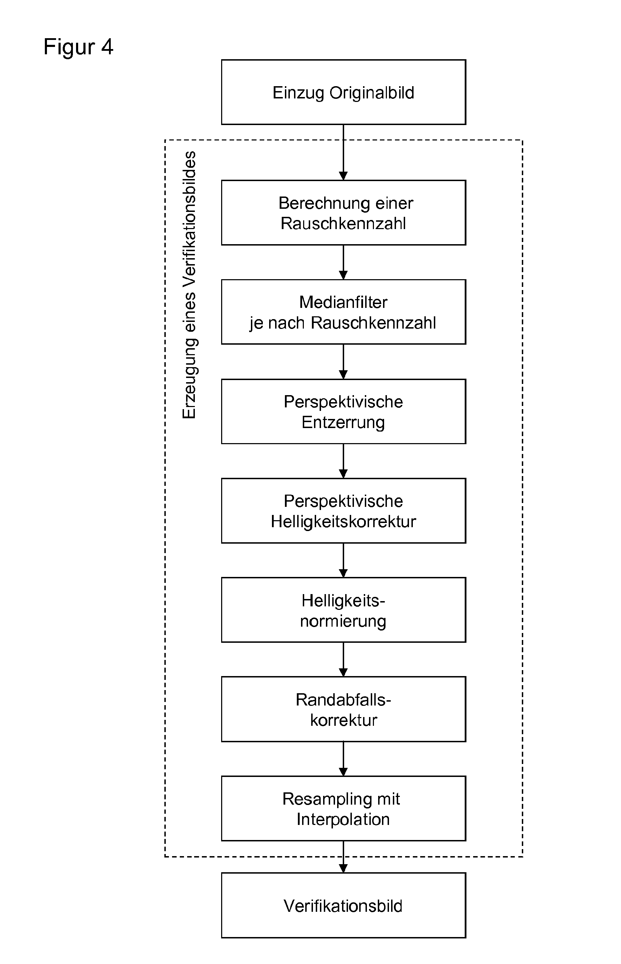

Figur 4 zeigt noch einmal zusammenfassend eine mögliche Abfolge der einzelnen Bildbearbeitungsschritte. Die meisten Bildbearbeitungsschritte können in ihrer Reihenfolge vertauscht werden, so dass die Abfolge in Figur 4 nicht unbedingt der Abfolge der Erläuterungen der einzelnen Schritte entspricht.

Die Verifikationseinheit 28 kann in einem Exklusiv- oder Parallelbetrieb arbeiten. Im Exklusivbetrieb schaltet der Codeleser 10 vorübergehend aus dem Lesemodus in den Verifikationsmodus. Sobald in der Anlage, an welcher der Codeleser 10 montiert ist, ein Trigger für ein zu erfassendes Objekt ausgelöst wird, startet der Bildeinzug, bis ein erster Code 14 gelesen wurde. Weitere Trigger werden dann bis zum Ende der Verifikation nicht mehr angenommen. Nach erfolgreichem Lesen des Codes 14 wird der Codebereich perspektivisch entzerrt, und es wird eine Helligkeitskorrektur und Helligkeitsnormierung durchgeführt. Soweit notwendig, wird auch der Randabfall korrigiert. Falls die Modulgröße oder Balkendicke nicht der Normanforderung entspricht, wird die Auflösung des Verifikationsbildes in einem Resampling mit Interpolationstechnik erhöht. Sofern die anzuwendende Norm den Beleuchtungswinkel kennen soll, wie im Falle der AIM-DPM, wird der Winkel zwischen Objektebene 34 und Bildebene 32 aus der perspektivischen Transformation *M* berechnet. Ist stärkeres Bildrauschen vorhanden, wird ein nach einer Rauschkennzahl ausgewählter Glättungsfilter angewandt. Danach steht das Verifikationsbild zur Verfügung, und die von der Norm vorgeschriebenen Bewertungen der Codequalität können wie herkömmlich vorgenommen werden.

Bei ausreichenden Rechenkapazitäten in der Auswertungseinheit 22 können in einem echten Parallelbetrieb für sämtliche erfassten Codes 14 Verifikationsbilder erzeugt werden. Der Code 14 wird in einem Leseprozess decodiert, und zwar aus dem ursprünglichen Bild, gegebenenfalls nach eigenen Vorverarbeitungen, aus dem Verifikationsbild, oder redundant aus beiden Bildquellen. Parallel zu dem Leseprozess läuft ein Verifikationsprozess, in dem die Verifikationsbilder wie oben für den Exklusivbetrieb beschrieben erzeugt und die Codes 14 anschließend auf deren Basis verifiziert werden.

Genügt die Rechenkapazität nicht für einen derartigen echten Parallelbetrieb, so wird der Bildbereich des Codes 14 nach erfolgter Online-Lesung in einen parallel arbeitenden Hintergrundprozess kopiert. Dieser Hintergrundprozess unterscheidet sich von dem echt parallelen Verifikationsprozess vor allem dadurch, dass ihm nur diejenigen Rechenkapazitäten zur Verfügung gestellt werden, welche der vorrangige Leseprozess übrig lässt. Der Hintergrundprozess nutzt dafür insbesondere Zeiten von Objektlücken beziehungsweise Lesetorlücken, in denen keine Online-Decodierung möglich oder notwendig ist und in denen üblicherweise auch kein erneuter Bildeinzug erfolgt. In diesem Fall bestimmt somit die Auslastung des Gesamtsystems ohne Verifikation die Quote von Codes 14, die verifiziert werden können. Da die Online-Decodierung vorrangig ist, kann der Anteil verifizierter Codes 14 auch sehr gering bleiben. Dies hängt unter anderem von der Häufigkeit und Länge der Lesetore ab, also der Phasen mit vom Codeleser 10 zu erfassenden Objekten und Codes 14 in dem Erfassungsbereich 12.

Die Verifikationsergebnisse können über den Ausgang 30 ausgelesen, auf ein Speichermedium geschrieben oder am Codeleser 10 angezeigt werden. Ein Verifikationsreport enthält beispielsweise ein Logfile mit sämtlichen Verifikationsergebnissen oder Aufbereitungen davon, etwa ein Diagramm der letzten 24 Stunden als Verifikationskurve mit einem Stundeneintrag aus den gemittelten Werten aller in dieser Stunde erfolgten Verifikationen. Denkbar ist auch die Ausgabe einer Quote, wie viele Codes 14 von einem Hintergrundprozess gegenüber der Gesamtzahl gelesener Codes 14 einer Verifikation unterzogen werden konnten, und wie viele verifizierte Codes 14 den Qualitätsanforderungen genügt haben.

Auf dem Ausgang 30 oder einem weiteren Ausgang kann auch direkt eine gewünschte Reaktion auf die Verifikation geschaltet werden. Beispielsweise wird ein nachgelagerter Aktor angewiesen, Objekte mit Codes 14 ungenügender Qualität aus einem Förderprozess auszusortieren. Bei der Verschaltung ist allerdings zu berücksichtigen, dass der Code 14 wegen des hohen Rechenaufwands für die Verifikation der Code 14 die Erfassungszone möglicherweise schon verlassen hat, ehe das Verifikationsergebnis vorliegt. Etwas geringere Anforderungen an die Reaktionszeit werden gestellt, wenn sich die Codequalität anhaltend verschlechtert und insgesamt, nicht lediglich auf ein Objekt bezogen korrigierend in den Prozess eingegriffen werden sollte.

Das Verifikationsbild kann durch weitere Effekte verzerrt sein, die bisher nicht angesprochen wurden. Mögliche Ursachen sind Bewegungsunschärfen, wenn sich die Codes beim Lesen in Relativbewegung zu dem Codeleser 10 befinden, sehr kurze Shutter- oder Belichtungszeiten, die das Bildrauschen erhöhen, oder auch weitere optische Eigenschaften des Codelesers 10. Es ist denkbar, derartige Effekte zusätzlich zu berücksichtigen und deren Artefakte durch entsprechend erweiterte Bildbearbeitung zu entfernen.

## Patentansprüche

1. Codeleser (10), insbesondere kamerabasierter Codeleser, mit einem Bildsensor (20) zur Erzeugung von in Pixel aufgelösten Bildern eines Erfassungsbereichs (12), mit einer Decodiereinheit (24), um Codebereiche (14) in den Bildern zu identifizieren und deren codierte Information auszulesen, sowie mit einer Verifikationseinheit (28) zur Beurteilung der Codequalität nach vorgegebenen Kriterien,
**dadurch gekennzeichnet,**
**dass** die Verifikationseinheit (28) dafür ausgebildet ist, für die Verifikation zunächst aus den Codebereichen (14) mittels Bildbearbeitung ein normiertes Verifikationsbild des Codes zu erzeugen.

2. Codeleser (10) nach Anspruch 1,
wobei die Bildbearbeitung bei der Erzeugung des normierten Verifikationsbildes mindestens eine der folgenden Maßnahmen umfasst: perspektivische Entzerrung, Helligkeitskorrektur, Helligkeitsnormierung, Größennormierung insbesondere von Codemodulen, Rauschunterdrückung und/oder Beleuchtungswinkelbestimmung.

3. Codeleser (10) nach Anspruch 1 oder 2,
wobei die Verifikationseinheit (28) dafür ausgebildet ist, Bildbereiche mit Hilfe einer perspektivischen Transformation (*M*) zu entzerren, welche Geometrien auf einer Objektebene (34) in dem Erfassungsbereich (12) in Geometrien der Bildebene (32) umrechnet.

4. Codeleser (10) nach einem der vorhergehenden Ansprüche,
wobei die Verifikationseinheit (28) dafür ausgebildet ist, Helligkeitswerte von einzelnen Pixeln oder Gruppen von Pixeln mit einem Korrekturfaktor zu modifizieren, der aus einer perspektivischen Transformation (*M*) berechnet ist, welche Geometrien auf einer Objektebene (34) in dem Erfassungsbereich (12) in Geometrien der Bildebene (32) umrechnet, um ein gleichmäßiger ausgeleuchtetes Bild zu erhalten.

5. Codeleser (10) nach Anspruch 4,
wobei die Verifikationseinheit (28) dafür ausgebildet ist, einen Korrekturfaktor aus dem Verhältnis des Flächeninhalts (A_{Q1}, A_{Q2}) einer Teilfläche (Q1, Q2) der Bildebene (32), insbesondere einer durch regelmäßige Aufteilung der Bildebene (32) erhaltenen Teilfläche (Q), zu dem Flächeninhalt (A_{T1}, A_{T2}) der gemäß der perspektivischen Transformation (*M*) entstehenden Teilfläche (T1, T2) zu berechnen.

6. Codeleser (10) nach einem der Ansprüche 3 bis 5,
wobei eine Kalibriereinheit (26) vorgesehen ist, welche dafür ausgebildet ist, die perspektivische Transformation (*M*) als diejenige zu bestimmen, mit der eine bekannte absolute Geometrie eines Kalibriercodes in dessen erfasste Geometrie in dem Bild überführt wird.

7. Codeleser (10) nach einem der Ansprüche 3 bis 6,
wobei die Verifikationseinheit (28) dafür ausgebildet ist, einen Raumwinkel zwischen der Bildebene (32) und der Objektebene (34) aus der perspektivischen Transformation (*M*) abzuleiten.

8. Codeleser (10) nach einem der vorhergehenden Ansprüche,
wobei die Verifikationseinheit (28) dafür ausgebildet ist, eine Helligkeitskorrektur mit Randabfallkorrekturfaktoren durchzuführen, die einen bekannten oder angenommenen Helligkeitsabfall des Bildsensors (20) in dessen Randbereichen kompensieren.

9. Codeleser (10) nach einem der vorhergehenden Ansprüche,
wobei die Verifikationseinheit (28) dafür ausgebildet ist, einen Mittelwert der Helligkeitswerte von hellen Codeelementen zu bestimmen, einen Normierungsfaktor aus dem Verhältnis des Mittelwertes zu einem gewünschten Mittelwert zu berechnen und die Helligkeit des Codebereiches (14) zu normieren, indem dessen Helligkeit mit dem Normierungsfaktor angepasst wird.

10. Codeleser (10) nach einem der vorhergehenden Ansprüche,
wobei die Verifikationseinheit (28) dafür ausgebildet ist, die Codebereiche (14) durch Interpolation der erfassten Bilddaten so zu reskalieren, dass alle Codemodule eine Mindestgröße aufweisen.

11. Codeleser (10) nach einem der vorhergehenden Ansprüche,
wobei die Verifikationseinheit (28) dafür ausgebildet ist, eine Kennzahl für ein Bildrauschen in dem Codebereich (14) zu ermitteln und das Bild des Codebereichs (14) mit einem Filter zu glätten, der anhand der Kennzahl parametriert ist.

12. Codeleser (10) nach einem der vorhergehenden Ansprüche,
wobei die Verifikationseinheit (28) dafür ausgebildet ist, ein Verifikationsbild parallel zu der Decodierung des Codeinhalts in der Decodiereinheit (24) zu erzeugen und/oder zu beurteilen.

13. Verfahren zur Online-Verifikation eines Codes (14), der von einem Bildsensor (20) eines Codelesers (10) in einem in Pixel aufgelösten Bild erfasst wird, wobei die codierte Information des Codes (14) ausgelesen und die Codequalität nach vorgegebenen Kriterien beurteilt wird,
**dadurch gekennzeichnet,**
**dass** für die Verifikation zunächst aus dem Bild mittels Bildbearbeitung ein normiertes Verifikationsbild des Codes (14) erzeugt wird.

14. Verfahren nach Anspruch 13,
wobei die Bildbearbeitung bei der Erzeugung des normierten Verifikationsbildes mindestens eine der folgenden Maßnahmen umfasst: perspektivische Entzerrung, Helligkeitskorrektur, Helligkeitsnormierung, Größennormierung insbesondere von Codemodulen, Rauschunterdrückung und/oder Raumwinkelbestimmung.

15. Verfahren nach Anspruch 13 oder 14,
wobei eine perspektivische Transformation (*M*) bestimmt wird, welche Geometrien auf einer Objektebene (34) in dem Erfassungsbereich (12) in Geometrien der Bildebene (32) umrechnet, und wobei das Bild mit Hilfe der perspektivischen Transformation (*M*) entzerrt und dessen Helligkeit korrigiert wird.
